# EUROPEAN PATENT APPLICATION

(11) **EP 3 541 018 A1**
(43) Date of publication of application: **18.09.2019**
(21) Application number: 18162089.9
(22) Date of filing: 15.03.2018
(51) Int. Cl.: H04L 12/26

(54) **NETWORK FAILURE ALERT SYSTEM AND METHOD**

(71) Applicant: Swisscom AG, 3050 Bern (CH)
(72) Inventor: Mettler, Andreas, 8005 Zürich (CH); Bieri, Stephan, 5506 Mägenwil (CH); Freitag, Daniel Gerhard, 2501 Biel (CH)
(74) Representative: Mirza, Akram Karim

(57) **Abstract**

A method and system for monitoring the status of components in a larger network connecting multiple customer premises equipment (CPE) with the larger network at least partly operated by a network operator is described including regularly receiving network messages with at least part of an associated signal path (121) of each network message through the network (12) known and/or determined based on the content of the network messages; monitoring a presence or absence of the regularly received network messages, wherein the monitoring prompts a determining of a network proximity comprising network components, with the network components of the network proximity selected from one or more network components comprised in the at least part of the associated signal paths (121) of the network messages; and determining a status of one or more network components in the network proximity based on the monitoring and the determined network proximity.

## Description

### Field of the invention

The present invention relates to systems and methods for identifying failures of components or parts within networks, particularly in wide area networks such as fixed line or landline communication and data networks.

### Description of related art

Operators of wide area networks covering a wide geographical area with many customers seek to identify and localize failures in their network as fast and as accurately as possible. Quickly pinpointing the cause of a network failure allows for rapid intervention by the operator. The type of intervention following a network failure may range from alerting customers affected by the failure, to mobilizing maintenance personnel, to remedy the failure as quickly as possible.

It may be appreciated by persons skilled in the art that methods and systems for identifying failures in networks are most acceptable when they do not add much complexity or large amounts of additional data or signal traffic to the network thus monitored.

In view of the known art, it may be seen as a problem to provide a widely applicable monitoring system and method, with little traffic overhead to the monitored network.

### Summary of the invention

A system and method is provided for monitoring the status of network components, substantially as shown in and/or described in connection with at least one of the figures, and as set forth more completely in the claims.

The systems and methods allow for identifying failures of components within networks, particularly wide area networks such as fixed line or landline communication networks and data networks. The failures may include failures of edge or terminal node components, i.e. devices connecting the network to customer premise equipment (CPEs) or core components (inter-)connecting parts of the network or the network and operator or central office (CO) facilities. Additionally, partial interruptions of locations or regions may be detected, such as cable cuts in the access network, power supply interruptions at customers' sites, but also failures of redundant facilities like load balancers. The systems and methods also allow for constant, almost instantaneous, monitoring of the performance of the impacted customer CPE from operator facilities. The systems and methods described herein have advantages and possibilities exceeding those provided by the monitoring of single network components as known in the art.

These and other aspects, advantages and novel features of the present invention, as well as details of an illustrated embodiment thereof, will be more fully understood from the following description and drawings.

### Brief Description of the Drawings

The invention will be better understood with the aid of the description of embodiments given by way of example and illustrated by the figures, in which:
Fig. 1 illustrates a schematic example of a network to which the present invention may be applied;
Fig. 2 illustrates steps in accordance with an example of the invention;
Figs. 3 shows a possible rule for observing events related to a network component;
Figs. 4A and 4B show examples of the rules applied to status information of network components, respectively;
Figs. 5A and 5B show exemplary rules for aggregating status information related to a network component; and
Figs. 6A and 6B show exemplary network failures such as power failures or cable cuts as diagnosed through the monitoring systems and methods in accordance with present invention.

### Detailed Description

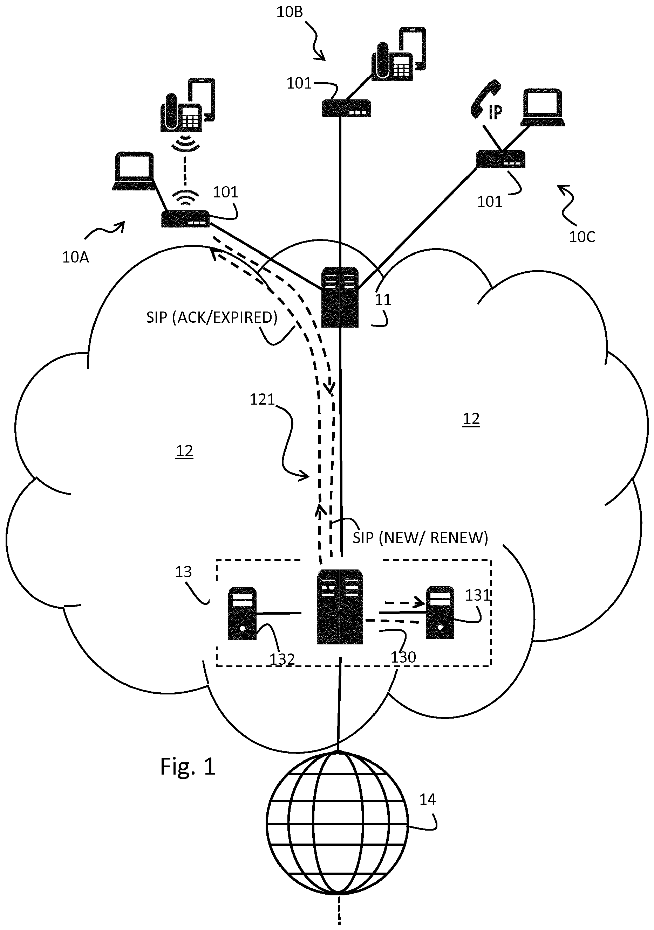

Fig 1. shows a plurality of customer premises equipment (CPE) as exemplified by CPE 10A, 10B, 10C, each set located on the premises of an individual users or a company, for example. The sets of CPEs 10A, 10B, 10C, are shown with each including a modem or modem-router 101. Each modem 101 may be connected to an edge or a terminal node 11 of an operator's network 12. In particular, each modem 101 may be connected to a different port of an edge or a terminal node 11. Other nodes connected to the operator's network 12 may include a central office equipment (CO) 13, including servers, gateways or switches 130 and specialized servers 131 to support network communication protocols such as a Voice-over-IP (VoIP) communication core server. A signal path 121 indicates a physical signal path network messages may use from a set of CPEs 10A, for example, through the network 12 to a specialized server 131. The network messages may, for example, be SIP messages as used for example in VoIP communications. Also shown as included in the CO 13 is a monitoring system 132 for monitoring the status of network components in accordance with various embodiments of the invention. The central office equipment 13 may also provide access to other networks or the general Internet 14.

The sets of CPEs 10A, 10B, 10C may further comprise one or more devices at a user's premises enabled for networking. The one or more devices of the set of CPEs 10A, 10B, 10C may make up at least part of a user's network. The devices may be, for example, computing devices, networking devices, peripheral devices such as smart phones, personal computers, game consoles, set-top boxes, routers, printers, scanners, TVs, media centers etc.

The modems or modem-routers 101 may for example be DSL modems, fiber modems, or cable modems or routers containing such modems, depending on the characteristics of the access network. The modems 101 may be operable to modulate-demodulate (thus "modem") data from and to the customer's network to the operator's backbone network. Frequently, operators utilize a variant of a Digital Subscriber Line (DSL) network or a coax cable type network such as DOCSIS to connect the customer to the backbone network. In some instances, the operators also use optical fiber networks to connect the customer. The modems 101 may be stand-alone components or may be part of a networking component of the set of CPEs 10A, 10B, 10C such as a set top box or a gateway server and the like. The modems 101 may connect, or be integrated into, on the user's side to one or more components of the set of CPEs 10A, 10B, 10C through a physical connection or a wireless connection and on the network side to a port of the edge or terminal node 11.

The modems 101 may comprise suitable logic, circuitry and/or code to enable modulating and demodulating networking messages onto a plurality of physical transmission media. Specifically, the modems 101 may be operable to transmit and receive data via a first communication interface with the network 12, and via a second communication interface communicating with other parts of the CPEs. For example, on the CPE side, the modem 101 may be operable using TCP/IP protocols over Ethernet, 802.11 Wireless LAN, Powerline communications and/or similar infrastructure found on a customer's premises. On the network side, the modem 101 may be operable using for example DSL protocols over twisted-pair telephone cables, a DOCSIS protocol over coax cable, or protocols for communication over optical fibers.

The modems 101 may comprise suitable logic, circuitry and/or code to enable voice and/or video telecommunications over IP (VoIP) traffic via a client (SIP client), or a unified client (UC) to handle VoIP traffic from multiple sources within the customer's private network. The VoIP client, SIP client or unified client (UC) may comprise suitable logic, circuitry and/or code to enable VoIP to be carried and processed in accordance with various protocols and/or various embodiments of the invention.

The edge or terminal node 11 may be, for example, a switching equipment such as a DSLAM (Digital Subscriber Line Access Multiplexer) or a micro Connected Network Area connector (microCAN), located in a street cabinet, at the curb, or in a building or any other suitable location including even the central office 13. The edge node 11 may comprise suitable logic, circuitry and/or code to communicatively couple a plurality of modems 101 to the operator's network 12 to establish signal paths 121 for voice and/or data communication channels through the network 12, such as VoIP communication channels or similar communications channels based on other protocols. The physical point of entry of the signal path 121 of a communication channel or line into a terminal node 11 may be referred to herein as a port. The port can be regarded as a border or limit of the operator managed network as equipment beyond that border may already be at least partly under the operative control of another party such as a customer.

The central office 13 houses the networking functionality, management, and compute power needed to provide voice and data services to enterprise and residential subscribers of the operator's network 12. It may include for example POTS ("Plain Old Telephone Service") switching equipment, other legacy equipment, and/or DSL or optical networking (PON) access equipment, and/or IP/Ethernet routing and switching capabilities for residential and enterprise services. The central office 13 may equally comprise similar technology suitable for any other network access technology, such as for example DOCSIS. The general servers, gateways or switches 130 comprise suitable logic, circuitry and/or code to be operable to perform the general functions of the CO 13.

The specialized server(s) 131 may comprise suitable logic, circuitry and/or code to enable specialized services, for example, to operate communication services with associated protocols, such as for example required to operate VoIP services. It should be noted that the specialized servers 131 may generally be implemented as software and configurations may share the same hardware as other CO equipment 13 such as the general servers, gateways or switches 130. The specialized server 131 may include a SIP server.

The monitoring system 132 comprises suitable logic, circuitry and/or code to enable the monitoring of network traffic as required to implement methods in accordance with the present invention. It should be noted that the monitoring system 132 may generally be implemented as software and configurations may share the same hardware other CO equipment 13, including, for example, the specialized server(s) 131 or the general servers, gateways or switches 130.

The other network or the internet 14 may comprise suitable logic, circuitry and/or code to extend the communications channels of the network 12, and of the sets of CPEs connected to the network 12, to other networks. The network 14 may, for example, be the Internet or World Wide Web, or another wide area corporate network etc.

As modern telecommunication operations move more and more towards virtualized and distributed (cloud) services, the co-location of CO equipment 13 as shown in Fig. 1 need not be a physical co-location but may indicate just access to network messages and data from any location under control of the network operator, that is, a functional co-location.

In operation, the modems 101 and CO 13 may exchange messages such as session initiation protocol (SIP) messages NEW and/or RENEW and other associated messages from the specialized server 131 (for example ACK and/or EXPIRED messages) over a signal path 121 through the operator's network 12 as illustrated in Fig.1 with exemplary dashed arrows. Network messages may be transmitted or received at regular or at substantially known intervals. SIP network messages may be used for signaling and controlling communication sessions which establish the communication channels, for example, for voice and/or video Internet telephony, private IP telephone systems, or instant messaging over IP networks. In particular, an EXPIRED network message may be issued by the specialized server when a communication session and/or channel has been previously opened but no RENEW signal is received from the connected modem 101 within a certain time interval as may be prescribed by the communication protocol governing the communication session. Any device within a customer's network and hence any device or component of the set of CPEs 10A, 10B, 10C may be a source of signals, including network messages, to the CO 13 via the associated modem 101, to be used for the systems and methods as described herein. For example, a VoIP enabled telephone of the CPE set 10A, 10B, 10C may be generating network messages, which may then be communicated to the CO 13 via the connected modem 101.

The messages received in the CO 13 are treated and processed in accordance with an applicable communication protocol, i.e. for example SIP or VoIP messages at the specialized server(s) 131. In addition, the network messages received by the CO 13 may also be monitored by the monitoring system 132, in accordance with various embodiments of the invention. For that purpose, the specialized servers 131 and the monitoring system 132 may be communicatively connected to allow data to be transferred (or even received simultaneously) from the servers 131 to the system 132.

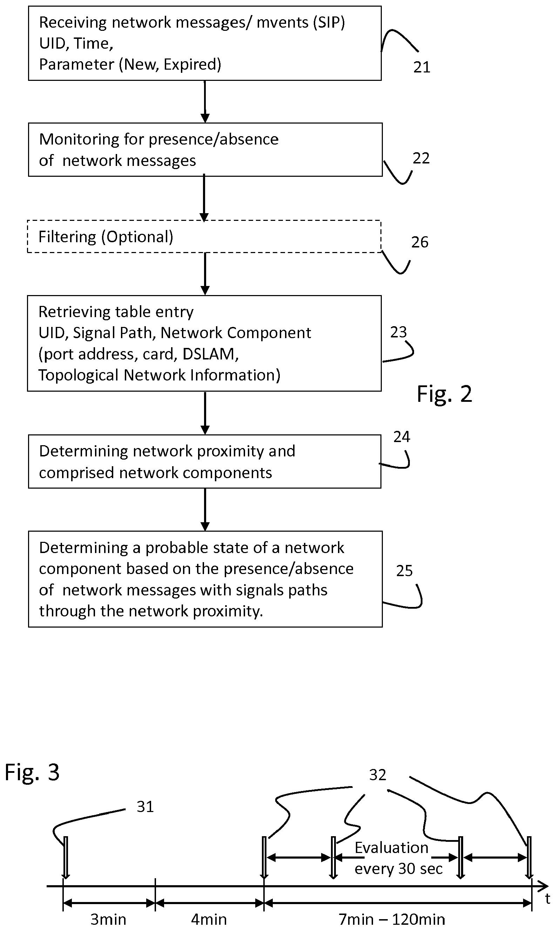

Fig. 2 shows a diagram of steps of a method in accordance with an exemplary embodiment of the invention. The method may include the receiving step 21 of receiving network messages or event messages. The message in receiving step 21 may be sent through the network and then received regularly, e. g., at or within known time intervals on a regular or periodic basis as prescribed for example by a communication protocol setting up communication channels through the network 12. The network messages may be issued for example from a modem 101 or other elements of CPE 10A, 10B, 10C equipment as described for Fig. 1 and may be subsequently received at, and/or collected at the monitoring system 132, which may be part of, or communicatively coupled to, the CO 13. In accordance with various embodiments of the invention, the monitoring system 132 may also access the network messages or event messages at the specialized servers 131. In some instances, the monitoring system 132 may access the network messages or information contained therein, in aggregated form at the specialized server(s) 131 for example in the form of data sets or tables. In some embodiments, the monitoring system 132 may be a part of the specialized servers 131. It will be clear to the person skilled in the art that the monitoring system 132 refers to a functional description and its implementation may be achieved in a number of ways that shall not be limited to the examples provided here. The network message or event message received in step 21 may comprise an identifier, a time stamp, a message status, and/or further parameters.

The identifier may be, for example, a unique identifier (UID) or any identifier that enables the network operator to identify for example the equipment that generated a corresponding network message. The equipment identified may, for example, be a device of a CPE set 10A, 10B, 10C or a modem 101. In accordance with various embodiments of the invention, the identifier may also identify a sub network such as a home network, or a user. In some instances, for example when an identifier may identify a part of a network comprising a plurality of network equipment, or a user, the identifier may also be associated with a nominal proprietor of the device that generated the network message. For example, if the identifier is a standard telephone number, this telephone number may be suitable to identify a location such as an apartment/house/home network of a user and/or not only a specific networking device in a set of CPE 10A, 10B, 10C.

The network message may comprise a time stamp. The time stamp may indicate when the network message was generated, or when the message was transmitted or received from a specific network component, typically a network component associated with the identifier. In accordance with various embodiments of the invention the time stamp may be any information related to a timing of the network message, in accordance with various communication protocols.

Further, the network message may comprise a message status indicative of the status of the communication channel established or maintained. The message status may typically comprise "NEW" or "EXPIRED," or any other indication of the status of a communication channel when the network message was generated. The status "EXPIRED" may in some instances not be generated directly by a SIP or unified client equipment but may be for example generated by the SIP server in response to a missing session "RENEW" or "NEW" signal as expected per the applied communication protocol to be issued from a specific SIP client in order to indicate or broadcast readiness to communicate. In such a case, the status "EXPIRED" message may then not be transmitted through the network along a signal path 121 as illustrated in FIG. 1, but is communicated only within the CO 13, and typically between the specialized server 131 and the monitoring system 132. Such a message may better be referred to as an event. For that reason, the term "message" or "network message" as used herein may include an "event" and vice versa.

The network message may comprise further parameters, for example bit patterns, flags etc. For example, these further parameters may be used to distinguish between a plurality of network messages issued by a same issuing unit, i.e. between a plurality of messages with a same identifier. Further parameters shall, however, not be limited to distinguishing between a plurality of network messages/events.

Further shown in Fig. 2 is a monitoring step 22 for monitoring the presence or absence of network messages. The network messages are expected for active communication channels (and hence intact signal paths through the network) to be received regularly, e.g. at known intervals. Hence by monitoring the timing of a plurality of network messages and noting expected but missing network message the absence of a network message can be monitored. Alternatively, a missing network message can trigger an action based on the rules of the communication protocol, e.g. causing the issuing of a "EXPIRED" - type message status or event, the occurrence of which can be monitored as a substitute for the absence of an expected network message.

Further shown in Fig. 2 is the retrieving step 23 of retrieving at the monitoring system 132 an entry of a database or of a lookup table. The entries of the database or lookup table accessed during the retrieval step 23 may allow to compare an identifier included in the network message of steps 21 and 22 with one or more identifiers of network components included in the database or lookup table. If a network component with a same identifier is in the look up table/database, the identified network component may be any part of the network 12 or of the signal path of the received network message, including a switch, DSLAM, card, port or similar component. Alternatively, the identified network component may be a core network element such as a Broadband Network Gateway (BNG), Broadband Remote Access Server (BRAS), or any other component and/or network part. Furthermore, the entry of the database from step 23 may comprise further information linked to an identifier, such as other network components that may communicatively be coupled to an identified network component. An example of such an entry may be an entry linking a telephone number of a user and the port of a DSLAM to which a VoIP CPE of that user is connected.

The database entry may further include or have access to network layout, network location or other network topological information associated with the identifier of the network message of monitoring step 21. In particular, the database entry may allow a determination of at least part of the signal path 121 that the network message took through the network 12. Specifically, the entry port connected to the modem or CPE which issued the network message and/or other network components and/or a network location through which the message passed after entry into the network, may be identified.

Based on the monitoring step 22 and the information derived from the retrieval step 23 a further proximity step 24 is shown in Fig.2 for determining a network proximity based on the detection of an absent network message in step 22 and using the information retrieved in step 23.

A network proximity of a particular signal path can be defined for example based on the signal paths of other communication channels which share network components with that particular signal path. In an abstract way, any signal path for which a network proximity is defined can be seen as the trunk (and one branch) of tree with all other branches making up the network proximity being the (plurality of) signal paths branching of at network components along the signal path in question. For example, if an interrupted signal path is known to start at a specific port of a specific network card with the network card being part of a specific DSLAM and the specific DSLAM being connected to a specific switch in the CO, then all ports of the specific network card and all ports of the network cards of the specific DSLAM and all ports of the network cards of DSLAMs connected to the specific switch may be regarded as the network proximity of the failed signal path. The network proximity of a signal path can be derived from the operator's knowledge of the physical layout of the network, its components and connections. However, depending on the communication protocol, the network messages, themselves, may carry embedded routing information that allow to identify the signal path any particular message may have taken through the network and the components shared by signals paths of a multitude of network messages. In such a case detailed knowledge of the physical network layout may not be required to apply systems and methods in accordance with the present invention.

Further shown in Fig. 2 is a step 25 of determining a (probable) state of a network component. This determination step 25 is based on the monitoring of the presence or absence of network messages combined with or mapped onto the network proximity as defined above. By analyzing the absence of expected network messages within the network proximity it is possible to determine at which point along the signal path and hence at which one of the network components involved a likely failure occurred. The step 25 may include an aggregation of monitoring results of the monitoring step 22 within a defined network proximity. Through this aggregation and hence the knowledge which of the signals paths through the network proximity are intact or interrupted, the determination of a status of a network component can be made or improved.
For example, a DSLAM may comprise a plurality of cards/ports and relevant messages of the plurality of cards/ports may be grouped as network proximity to derive status information of the DSLAM. The relevant network messages associated with signal paths through the DSLAM may be collected and processed as described further below.

It should be noted that the determination of the status of a network component in accordance with the above described steps may not be necessarily deterministic but is in many cases probabilistic. In other words, while in some cases a failure of a network component may be established with certainty, in other cases a set of rules may be required to determine a status making the resulting state a probable or likely state. Instead of defining explicit rules an approach based on machine learning or artificial intelligence may be used as is known per se with for example the machine learning leading to a recognition of patterns in the presence or absence of network messages characteristic of the status of a network component.

In a rule-based approach, the network messages may, for example, be ordered as part of step 25 in a temporal sequence for a specific network component. In particular, the status may be based on the frequency of the occurrence of SIP messages comprising a message status "NEW" indicative of an active communication channel from a CPE location and hence from the port to which such CPE location is connected and/or "EXPIRED" potentially indicative of a breakdown of a previously active communication channel and hence a component failure within any of the network components along the signal path of the failing communication channel and the timing of such messages. This will be further explained when referring to Fig. 3 below.

As further shown in Fig. 2, the method may further include an optional filtering step 26 to eliminate for example network messages that may be irrelevant to step 24. Network messages deemed irrelevant may be discarded from further processing. Irrelevant messages may comprise messages generated by a faulty CPE or an CPE not authorized by the network operator, or messages which cannot be unambiguously associated with an at least partly known signal path.

The optional filtering step 26 may also assess the data quality. For example, it may be possible to detect spurious or unreliable messages, using previously collected data of network component characteristics and/or intelligent pattern recognition or similar methods. In this case, the filtering step 26 may further discard network messages as irrelevant due to a lack in data quality.

Generally, the methods and systems as described herein may be seen as monitoring for the absence of network messages expected to be received through an active communication channel (and hence unbroken signal path) through the network. As network messages are generated or issued as part of an active communication channel and pass through a particular signal path of the network at regular, i.e. known intervals, the absence of such messages may be treated as an interruption of the signal path. However, based merely on the knowledge of such an interruption itself, it is typically not possible to determine which of the potentially many network components along the signal path may have caused an interruption. For such a determination, it is typically further required to define a network proximity of the interrupted signal path as in step 24 above.

With a network proximity determined, other communication channels and associated signals paths passing the network proximity can be also checked on the presence or absence of network messages. An interruption of more signals paths in the network proximity then allows to determine at least a probable status of the network components on the first interrupted signal path. For example, if several ports of the specific network card (as defined above) show an absence of network messages passing through, rules can be defined determining at which number of interrupted ports the specific network card can be determined to have failed. Similarly, if more network cards within the specific DSLAM are found to have failed as the signals paths through their respective parts are found to be interrupted, the specific DSLAM can be determined to have failed.

This monitoring process can cover some or all signals paths and in the presence of many active communications channels through the network a large part or even the entirety of such a network. By constantly monitoring for the absence or presence of network messages and mapping the interrupted signal paths on their network proximities as defined above the status of a large number of network components, even network components "deeper" within the network can be monitored at a time scale which is essentially limited only by the time intervals at which the network messages are issued or supposed to be issued and the data processing speed and capacity of the equipment used for the monitoring.

Thus, while it is understood by the person skilled in the art that a specific network component's status may be determined based on a last (current) received network message comprising a "NEW" or "EXPIRED" status or any equivalent messages or their absence such monitoring of a large number of network components may generate an unacceptably large processing overhead. It may therefore be advantageous to filter the messages and status information for example such that short interruptions do not cause a premature or inaccurate determination of the status of a network component. It may also be advantageous not to monitor all of the network at any given time with the same accuracy/attention but to define more specific monitoring routines for areas or network components estimated to be affected by an interruption.

Such methods may include the use of time stamps associated with the relevant network messages and particularly time sequences of network messages issued by a single CPE and/or associated with a single network component. For example, an SIP message comprising an "EXPIRED" indicator followed by an SIP message comprising a "NEW" indicator, may indicate the length of an interruption based on the time difference between the time stamps of the respective messages. It should be noted that the frequency at which the network messages of a sequences are received may to a large extent determine the response time of the monitoring methods described herein. An exemplary useful time lapse between messages may be 5 min or less, depending on specific communication protocols.

Fig. 3 illustrates an example of a method of monitoring a network port, as an exemplary series of events on a time axis. On the horizontal axis, there are shown illustrative time intervals of 3 mins, 4 mins, and 7-120 mins. There is further shown a plurality of downward directed arrows 31, 32. The arrow 31 may indicate a monitoring triggering event 31, which may be a networking message associated with a monitored networking component, or a set of networking components, comprising a change of message status from "NEW" to "EXPIRED," or vice versa. The arrows 32 may each indicate a time at which a port status of the networking component that generated the monitoring triggering event 31 may be evaluated, determined, or observed. There is shown a plurality of exemplary 30-second intervals between the arrows/evaluation times 32.

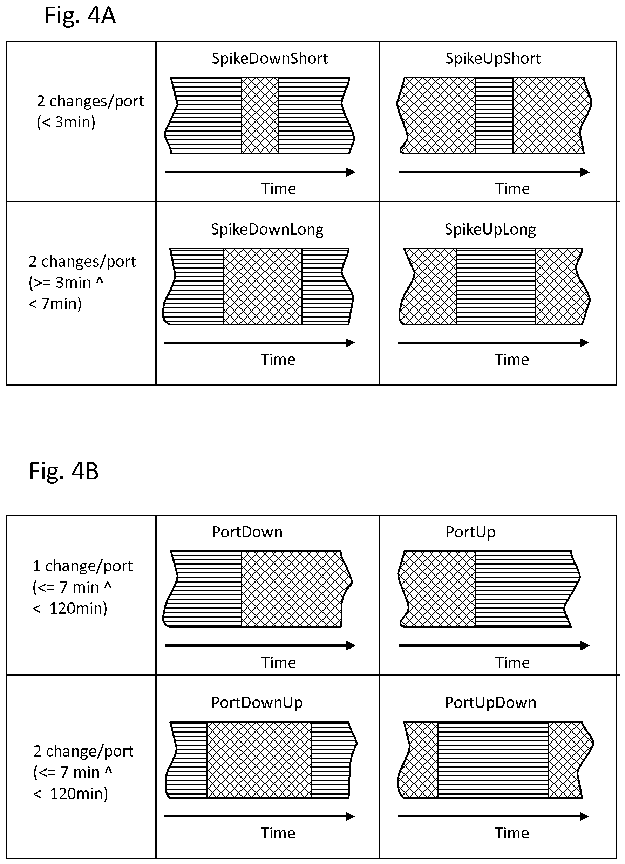

The 3min interval and 4 min interval may indicate exemplary time intervals representing time limits for issuing network messages or reboot times of networking components. The 7 - 120 min interval may indicate a monitoring interval. As understood by the person skilled in the art, the monitoring intervals (3,4,7-120 mins and 30s) represent merely exemplary time intervals of exemplary networking components. Without loss of generality, the time intervals may be chosen to match the conditions in a given network/networking scenario and the associated networking components and/or protocols and/or the speed and capacity of the computing equipment used to implement the monitoring system. Depending on the timing relationships between the monitoring triggering event 31 and the further observed message statuses, a status of a networking component (or of a set) may be determined as explained in more detail using the examples illustrated in Figs. 4.

After a monitoring triggering event 31 with a change in message status from "NEW" to "EXPIRED," or vice versa, may be observed, the message issuing network component/port is monitored for an initial 3 min interval. If a further change of message status from "NEW" to "EXPIRED," or vice versa, may be observed in this 3 min interval, a "short spike" status may be determined, as will be further explained using the top panels of Fig. 4A. If no further change of message status from "NEW" to "EXPIRED," or vice versa, may be observed in the initial 3 min interval, the network component/port may be monitored for a second interval of e.g. 4 mins, as illustrated in Fig. 3. If a further change of message status from "NEW" to "EXPIRED," or vice versa, may be observed in this 4 min interval, a "long spike" status may be determined, as will be further explained using the bottom panels of Fig. 4A.

If after the initial 3 min interval and 4 min interval that follows the monitoring triggering event 31 no change of message status from "NEW" to "EXPIRED," or vice versa, is observed, a third monitoring interval between e.g. 7 - 120 mins may be initiated. In this third monitoring interval, the network message statuses may be monitored (or polled) at period intervals, e.g. at 30 second intervals, as illustrated in Fig. 3. If during this third 7 - 120 min interval, no changes of message status from "NEW" to "EXPIRED," or vice versa, is observed, an "Up" or "Down" status may be determined, as will be further explained using the top panels of Fig. 4B. On the other hand, if a change of message status from "NEW" to "EXPIRED," or vice versa, is observed in this third interval, an "UpDown" or "DownUp" status may be determined, as will be further explained using the bottom panels of Fig. 4B. Due to the various statuses associated with the different intervals explained above, not all networking components or sets of networking components need to be monitored continuously. In this sense, the observations over the different time intervals may perform a filtering function to determine which networking components require monitoring. Thus, the application of the method and system described may reduce the number of networking devices that require long time monitoring.

Fig. 4A illustrates various exemplary network statuses that may be determined in a first and a second monitoring interval. There is shown a first row, illustrating the statuses of a networking component, or a set of networking components, when a second change of message status may be observed in a first monitoring interval. There is also shown a second row, illustrating the statuses of a networking component, or a set of networking components, when a second change of message status may be observed in a second monitoring interval, whereby no change of message status was observed in the first interval. Intervals in which the observed port is associated with a "NEW" or "RENEW" message status are marked by horizontally hatched blocks, intervals in which the observed port is inactive/down are marked by cross-hatched blocks. The width of the blocks is indicative of the duration of the particular port status (except for the blocks on the left or right side of a group of blocks). As also explained above for Fig. 3, after a monitoring triggering event 31 with a change in message status from "NEW" to "EXPIRED," or vice versa, may be observed, the network component/port associated with the message is monitored for an initial 3 min interval. If a second change of message status from "NEW" to "EXPIRED," or vice versa, may be observed in this 3min interval, a "short spike" status may be determined. If the monitoring triggering event 31 was a change from "NEW" to "EXPIRED," the resulting status may be a "SpikeDownShort," as illustrated in Fig. 4A, first row, first column. Vice versa, if the monitoring triggering event 31 was a change from "EXPIRED" to "NEW," the resulting status may be a "SpikeUpShort," as illustrated in Fig. 4A, first row, second column.

As also explained above for Fig. 3, after a monitoring triggering event 31 with a change in message status from "NEW" to "EXPIRED," or vice versa, may be observed, the network component/port associated with the message is monitored for an initial 3 min interval. If no second change of message status is observed in this initial 3 min monitoring interval, a second monitoring interval of e.g. 4 mins may be initiated. If a second change of message status from "NEW" to "EXPIRED," or vice versa, may be observed in this second 4 min interval, a "long spike" status may be determined. If the monitoring triggering event 31 was a change from "NEW" to "EXPIRED," the resulting status may be a "SpikeDownLong," as illustrated in Fig. 4A, second row, first column. Vice versa, if the monitoring triggering event 31 was a change from "EXPIRED" to "NEW," the resulting status may be a "SpikeUpLong," as illustrated in Fig. 4A, second row, second column.

The "spike" statuses illustrated in Fig. 4A may typically be related to a short interruption of a customer's CPE, and may be specifically related to a reboot or reset of the CPE or the DSLAM port or a restart of the IP-Session.

Fig. 4B illustrates exemplary statuses of a network component or a set of network components if there were no second changes of message status observed in the first and second monitoring intervals.

As also described above for Fig. 3, if in the initial 3 min interval and 4 min interval that follows the monitoring triggering event 31 no second change of message status from "NEW" to "EXPIRED," or vice versa, is observed, a third monitoring interval between e.g. 7 - 120 mins may be initiated. In this third monitoring interval, the network message statuses may be monitored at periodic intervals, e.g. at 30 second intervals, as illustrated in Fig. 3A. If during this third 7 - 120 min interval, no second change of message status from "NEW" to "EXPIRED," or vice versa, is observed, an "Up" or "Down" status may be determined. If the monitoring triggering event 31 was a change from "NEW" to "EXPIRED," then the status of the network component or set of network components may be set to "PortDown," as shown in the first row, first column of Fig. 4B. On the other hand, if the monitoring triggering event 31 was a change from "EXPIRED" to "NEW," then the status of the network component or set of network components may be set to "PortUp." This is illustrated in Fig. 4B, first row, second column.

On the other hand, if a further change of message status from "NEW" to "EXPIRED," or vice versa, may be observed in this third interval, an "UpDown" or "DownUp" status may be determined. If the monitoring triggering event 31 was a change from "NEW" to "EXPIRED," then the status of the network component or set of network components may be set to "PortDownUp". This is illustrated in Fig. 4B, second row, first column. On the other hand, if the monitoring triggering event 31 was a change from "EXPIRED" to "NEW," then the status of the network component or set of network components may be set to "PortUpDown." This is illustrated in Fig. 4B, second row, second column.

Additional rules for clustering or aggregating the statuses of individual observed network components/ports may be used to define statuses of further network components. For example, the status/state of a port card in a DSLAM may be determined based on the statuses of the individual ports. For example, if a certain percentage of ports are determined to be in a same state, the DSLAM may be similarly considered in that same state.

For example, under the condition that at least three ports of a network card for example at a DSLAM are required to be active and under the further condition that at least e.g. 80% of those active ports must show a state change, the following table shows a set of rules defining the exemplary status of the card:

**Table 1.**

| Limit | Ports States | Card State |
|---|---|---|
| 99% - 100% | Down, UpDown | Down |
| 80% -99% | Down, UpDown | Trending Down (dynamic state) |
| 99% - 100% | Up, DownUp | Up |
| 89% - 99% | Up, DownUp | Trending Up (dynamic state) |
| > 80% | SpikeUp, SpikeDown | Spike / Instable (dynamic state) |

The above introduced classification of statuses in accordance to the timing or rate in which a down/up status change occurs, i.e. in SpikeShort, SpikeLong, DownUp, UpDown etc. events allows for a further refinement of the monitoring systems and methods to include dynamic or developing states beyond the mere (binary) determination of whether a network component is working or not. For example, network components may be classified as unstable or as Trending Down or Trending Up.

The above rules may readily be further extended to include more complex network components, for example to the state of a DSLAM with several port cards. It should also be noted that the limits and thresholds may be set or adapted based on empirical data gained through trial and error, for example. As will be understood by the person skilled in the art, there are numerous ways on how appropriate thresholds for various states may be determined. For example, a network component may be regarded as generally interrupted under the condition that at least 60 per cent (instead of 80 %) of its ports are observed to be interrupted, e.g. "Down."

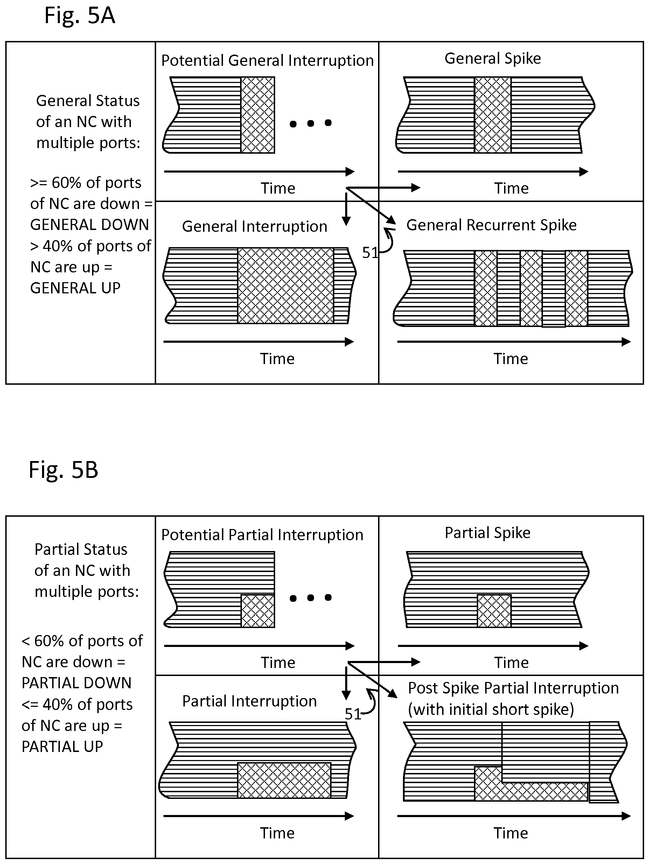

Such rules relating to the aggregation of status information of network components having several ports are further illustrated in Figs 5A and 5B in which ports associated with a "NEW" or "RENEW" message are indicated with blocks of horizontal hatching while ports associated with a "EXPIRED" message are marked using cross-hatched blocks as in FIGs 4A and 4B. In FIGs 5A and 5B the height of a block is proportional to the number of ports while the various lengths of the blocks are indicative of the duration of the status of the ports.

In Fig. 5A several possible statuses defined as general statuses for a network component (NC) with multiple ports (or similar input connections) are illustrated. Here the rules are defined such that a NC is considered generally "down" or interrupted in case that at least 60 per cent of its ports are found to be down (which each port status determined as for example described above). An NC is considered "up" or not interrupted if more than 40 per cent of its ports are up. Fig. 5A shows an example of a dynamic or developing status for an NC. Its initial status as shown in the upper left panel is a general "down" or interrupted state (i.e. at least 60 % of its connecting ports are found in "down" state within a 7min window. This status is defined as "Potential General Interruption", i.e. a general interruption lasting less than 7 min. The arrows 51 indicate three different statutes which may follow this "Potential General Interruption" status depending on the development of the port statuses. If the port statuses remain "down" in the following 120 min the status "Potential General Interruption" of the NC changes into the status "General Interruption" (as indicated in the lower left panel of Fig. 5A). If the ports return to an "up" status the status "Potential General Interruption" is classified as "General Spike", as shown in the upper right panel. If the statutes of the ports of the NC change several times within the 120min window, the "Potential General Interruption" status develops into a status defined as "General Recurring Spike".

A further example of a status of possible interest for a dynamic or developing status of a NC component is presented in Fig. 5B. The case of FIG. 5B can be seen as complementary to the case of Fig 5A as it covers the cases where less than 60 % of the ports of the NC are "down" or 40 % or less of the ports are "up". Such conditions may be defined as "Partial", i.e., depending on the same time windows as described with reference to FIG. 5A above an initial "Potential Partial Interruption" (upper left panel) may develop as indicated by arrows 51 into a "Partial Interruption" (lower left panel), or, if the ports return to an "up" status, into a "Partial Spike" status (upper left panel). If only a fraction of the ports in an initial "down" status recover within the 120min window, a "Post Spike Partial Interruption" status may be defined and observed as shown in the lower right panel of FIG. 5B.

It should be generally noted that the definition of such dynamic or developing states and their significance depends to a large extend on the observation of subsequent behavior of NC and the general network, whether a particular status is found to be a good predictor for some future behavior of the NC. The dynamic or developing states can help in setting the thresholds or rules defining more complex or aggregated states like "Trending Up" or "Trending Down" for network components or parts of the networks.

For example, by defining rules such as described for any network component in a signal path of a network message full or partial outage or even a developing outage of any network element that is required to establish an IP-session from a customer's CPE can be detected. These are not only DSLAM, cards, fans, micro CANs, and switches, but also any core system components such as Broadband Network Gateway (BNG.) A condition for monitoring may be that there are reasonably frequent control signals available on the Customer CPE site per monitored network element. It may be disadvantageous if the customer is motivated to turn off the CPE. Using the SIP or other VoIP messages as status monitoring network messages may be advantageous because users generally maintain telephone equipment active in order to be reachable, thereby ensuring network messages suitable for monitoring equipment statuses.

It should be appreciated that the above systems and methods enable also the detection of cable cuts in an area and power supply interruptions at customer's sites. In both cases, typically other monitoring signals from alternative monitoring methods suffer from the same interruption. Furthermore, cable cuts within a fiber network may be detected, as well as problems of redundant systems like load balancers.

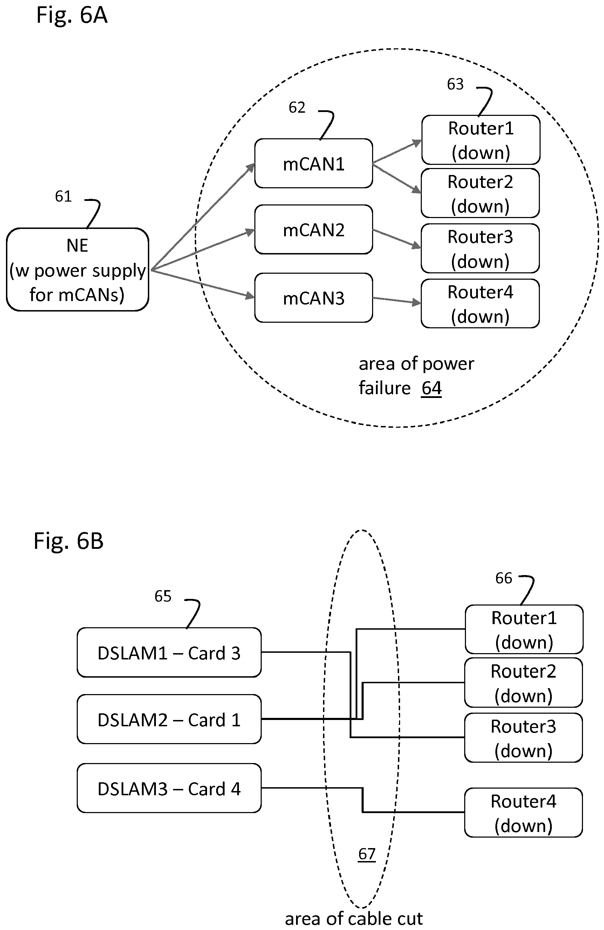

Two examples of how observations of the equipment issuing the registered network message can lead to a diagnosis of larger failures within the network infrastructure are shown in FIGs 6A and 6B.

In Fig. 6A there is shown a network equipment NE 61 connected to a number (e.g. 3) of micro-CANs mCAN1 -3 62, which in turn support a number (e.g. 4) of routers "Router1-4" 63. CAN stands for an exemplary Controlled Area Network. The NE 61 may supply power to the mCANs 62. The routers 63 may all be determined to be in a "Down" state. Depending on the locations of the different routers 63, an area 64 may be defined where a power outage may have occurred with a certain probability, linked to a specific status/state determination methodology.

In Fig. 6B there are shown a number (e.g. 3) of DSLAM insert cards 65 (card 1,3,4) in different DSLAMS "DSLAM1-3" 65. Each card 65 may be connected to a number (e.g. 4) of routers Router1 -4 66. The routers 66 are again assumed to be all inactive (state: down). Depending on the locations of the different routers 66 and the network topography, an area 67 can be defined where a cable cut may have occurred with a certain probability.

To perform a diagnosis of network failures as described above, a critical number of message issuing equipment components, such as CPE modems and/or routers should be monitored. It is understood that reliability of such systems and methods improve with a higher number of network message generating equipment involved. Using appropriate statistical processing, sufficiently reliable state/status estimations may be achieved with a reduced number of monitored networking equipment. For example, it may be sufficient for deriving statistically relevant status information across different levels of hierarchy of network components or for pinpointing a faulty region of the network that at least 50 % of the communication channels for connected (active) CPEs are monitored.

The methods described above may also readily be combined with a step of applying known line monitoring methods such as impedance measurements or low-level signal exchanges (for example, so-called "pings").

Assuming, for example, that the methods as described above indicate a line/component status as "down" while the line measurement of the line to the component indicates a signal exchange is possible, further problems can be flagged such as missing router synchronization, no pairing, no DCHP and similar errors. As such line measurements are resource intensive, the above methods may be used to select a limited sample of one or more communication channels and network components through which the selected communication channels run for additional line measurements.

While various embodiments of the present invention have been described above, it should be understood that they have been presented by way of example only, and not of limitation. Likewise, the various diagrams may depict an example structure or other configurations for the invention, which is done to aid in understanding features and functionality that can be included in the invention. Further, it should be understood that the various features, aspects and functionality described in one or more of the individual embodiments are not limited in their applicability to the particular embodiment with which they are described, but instead can be applied, alone or in various combinations, to one or more of the other embodiments of the invention.

## Claims

1. A method of monitoring a status of network components in a network (12) comprising the steps of:
- regularly receiving network messages with at least part of an associated signal path (121) of each network message through the network (12) known and/or determined based on the content of the network messages;
- monitoring a presence or absence of the regularly received network messages, wherein the monitoring prompts a determining of a network proximity comprising network components, with the network components of the network proximity selected from one or more network components comprised in the at least part of the associated signal paths (121) of the network messages; and
- determining a status of one or more network components in the network proximity based on the monitoring and the determined network proximity.

2. The method of claim 1 wherein the network messages are generated outside the network and enter the network (12) through ports of terminal nodes (11) of the network (12).

3. The method of claim 2 wherein the network messages are issued at regular intervals by customer premises equipment (CPE, 10A-C) with each CPE connected to the network (12) by a single port of a terminal node (11).

4. The method of claim 3 wherein each network message includes a unique identifier (UID) associating the network message with a CPE (10A-C) issuing the network message.

5. The method of claim 3 or 4 wherein the CPE (10A-C) while active issue the network messages at intervals of less than 10 min or even less than 5min.

6. The method of any of the previous claims wherein the network messages are associated with timing information.

7. The method of any of the previous claims wherein the network messages are issued when running a communication protocol used to establish communication through the network (12).

8. The method of claim 7 wherein the communication protocol is a session initialization (SIP) protocol or a Voice-over-Internet-Protocol (VoIP) communication protocol.

9. The method of any of the previous claims including defining a set of rules based on a number and/or a time of the monitored presence or absence of the network messages passing or expected to pass through single network components comprised in the associated signal path (121).

10. The method of any of the preceding claims further comprising the step of registering changes in status of the one or more network components in the network proximity over a defined time interval to further distinguish between a stable, an instable or a dynamic or developing status of a network component.

11. The method of any of the preceding claims, further comprising the step of using the status of a network component for selecting an associated signal path (121) and performing a line measurement to test one or more of the network components comprised in the selected signal path (121).

12. A monitoring system for monitoring a status of network components in a network (12) comprising the steps of:
- receiving equipment (131) for regularly receiving network messages with at least part of an associated signal path (121) of each network message through the network (12) known and/or determined based on the content of the network messages;
- monitoring equipment (132) to monitor a presence or absence of the regularly received network messages, wherein the monitoring prompts a determining of a network proximity comprising network components, with the network components of the network proximity selected from the one or more network components comprised in the at least part of the associated signal paths (121) of the network messages; and
- status determining equipment (132) to determine a status of one or more network components in the network proximity based on the monitoring and the determined network proximity.

13. The system of claim 12 communicatively linked during operation to a plurality of customer premises equipment (CPE, 10A-C) issuing the network messages.

14. The system of claim 13, wherein the CPE (10A-C) include one or more VoIP clients or a unified client for VoIP.

15. The method or system of any of the preceding claims, wherein the monitored network components include ports, network cards with ports or cabinet equipment such as DSLAMs or micro-CANs within the network (12).
